(19) **Europäisches Patentamt European Patent Office Office européen des brevets**

(11) **EP 1 446 254 B1**

(12) **EUROPÄISCHE PATENTSCHRIFT**

(45) Veröffentlichungstag und Bekanntmachung des Hinweises auf die Patenterteilung:
**20.06.2012 Patentblatt 2012/25**

(21) Anmeldenummer: **02796500.3**

(22) Anmeldetag: **12.11.2002**

(51) Int Cl.:
***B23H 1/00*** *(2006.01)*

(86) Internationale Anmeldenummer:
**PCT/DE2002/004198**

(87) Internationale Veröffentlichungsnummer:
**WO 2003/041900 (22.05.2003 Gazette 2003/21)**

(54) **VERFAHREN UND VORRICHTUNG ZUR ELEKTROEROSIVEN MATERIALBEARBEITUNG EINES WERKST CKS**

METHOD AND DEVICE FOR THE ELECTROEROSIVE MATERIAL MACHINING OF A WORKPIECE

PROCEDE ET DISPOSITIF D'USINAGE DE MATERIAUX PAR ELECTRO-EROSION D'UNE PIECE

(84) Benannte Vertragsstaaten:
**AT BE BG CH CY CZ DE DK EE ES FI FR GB GR IE IT LI LU MC NL PT SE SK TR**

(30) Priorität: **13.11.2001 DE 10155607**

(43) Veröffentlichungstag der Anmeldung:
**18.08.2004 Patentblatt 2004/34**
(73) Patentinhaber: **ROBERT BOSCH GMBH 70442 Stuttgart (DE)**

(72) Erfinder: **LUKIC, Boris 73479 Ellwangen (DE)**
(56) Entgegenhaltungen:
**DE-A- 2 203 773     US-A- 5 159 167
US-B1- 6 225 589**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur elektroerosiven Materialbearbeitung eines Werkstücks nach den Oberbegriffen der unabhängigen Ansprüche, wie es aus der US 4,771,157 bekannt ist.

Darüber hinaus ist aus der DE 31 42 606 A1 eine Vorrichtung zur elektroerosiven Bearbeitung bekannt, bei der die Drahtelektrode in Eigenschwingungen versetzt wird, um bei einer Änderung der Eigenfrequenzen der Drahtelektrode die Drahtlänge nachzujustieren und dadurch konstant zu halten.

Beim elektroerosiven Materialbearbeiten (der Terminus bezieht sich hier auf ein Bearbeitungsverfahren, das die Materialabtragung von einem leitenden Werkstück zumindest teilweise durch die Wirkung elektrischer Entladungen vorsieht) wird eine Werkzeugelektrode unter Abstand einem Werkstück über einen Arbeitsspalt gegenübergestellt. Der Arbeitsspalt wird mit einer Arbeitsflüssigkeit gespült, und ein Erosionsbearbeitungsstrom, gewöhnlich in Form einer Folge von elektrischen Impulsen, fließt zwischen der Werkzeugelektrode und dem Werkstück. Aufeinanderfolgende elektrische Entladungen werden so durch den mit Flüssigkeit gespülten Arbeitsspalt erzeugt, um Material vom Werkstück abzutragen. Entsprechend des Fortschritts der Materialabtragung wird die von einem Werkzeugkopf gehaltene Werkzeugelektrode durch ein Stellsystem vorgerückt, um den

Arbeitsspalt, der sich ansonsten vergrößern würde, im Wesentlichen konstant zu halten.

Beim Erosionsprozess kann es auch zu einem erosiven Verschleiß der Bearbeitungsfläche der Werkzeugelektrode kommen. Außerdem kommt es nach jeder Entladung zu einer Veränderung der Bedingungen im Arbeitsspalt, bedingt durch eine Veränderung der Eigenschaften des Dielektrikums, wie Verschmutzung, Temperatur usw., die z.B. die elektrische Leitfähigkeit verändern. Außer den elektrischen Parametern beeinflusst auch die Spülung den Erosionsprozess. Bei Bohrungen mit großem Aspektverhältnis kommt es oft vor, dass der Abtragungsprozess zum Erliegen kommt, da die Abtragprodukte nicht mehr aus dem Spalt entfernt werden können. Infolge dessen treten neben normalen Funkentladungen auch sogenannte Entartungen auf, die den Abtrag- bzw. Verschleiß deutlich beeinflussen. Unter einer Entartung fallen dabei insbesondere Leerlaufimpulse (Arbeitsspalt zu groß), Fehlentladungen (Arbeitsspalt zu klein) und Kurzschlussimpulse (Arbeitsspalt gleich Null).

Um einen guten Erosionsprozess gewährleisten zu können sind im Arbeitsspalt ideale Entladebedingungen zu schaffen, die das Auftreten von Kurzschlüssen, Fehlentladungen und Leerlaufimpulsen möglichst ausschließen. Wesentliches Kriterium ist hierbei die Erfassung von Störgrößen durch geeignete Prozesskenngrößen zur Beurteilung des momentanen Prozesszustandes. Verschiedene Strategien, die unterschiedliche Zielfunktionen beinhalten können, führen dann zu einer entsprechenden Nachführung der Stellgrößen an der Maschine.

Bei dem aus der US 4,771,157 bekannten Verfahren wird der Erosionsprozess durch einen Kurzschlussdetektor überwacht und entsprechend den Eingangsdaten über ein Stellsystem die Werkzeugelektrode in axialer Richtung bewegt, um den Arbeitsspalt im Wesentlichen konstant halten zu können.

Neuerdings ermöglicht der Einsatz der Fuzzy-Logik mittels der Formulierung von Regelwerken eine Kombination verschiedener Parameter zu einem Mehrgrößenregelsystem. So werden die Maschinenparameter an den jeweiligen Prozesszustand noch besser angepasst, die zum gewünschten Arbeitsergebnis führen.

Es ist jedoch sehr wichtig, dass ein Stellsystem, je nach Prozesszustand, die Werkzeugelektrode schnell und genau in die gewünschte Lage bringt. Daher werden immer schnellere und vor allem teurere Stellsysteme eingesetzt. Um die Trägheit des Stellsystems zu reduzieren versucht man, die Masse des beweglichen Teils des Stellsystems noch weiter zu reduzieren. Zu diesem Zweck haben manche Vorrichtungen zwei Stellsysteme: Ein Stellsystem, das die Werkzeugelektrode grob in die Nähe des Werkstücks bringt und ein genaueres und vor allem schnelleres Stellsystem, das in weiterer Folge die Feineinstellung des Arbeitsspalts bestimmt. Ein weiteres Problem betrifft die sogenannte Mikrofunkerosion, bei der die Werkzeugelektrode sehr dünn ist und einen Durchmesser zwischen 20 $\mu$m und 200 $\mu$m hat. Bis heute hat sich eine Mikrofunkerosion bei Mikrobohrungen kleiner als 0,1 mm und einem Aspektverhältnis zwischen Durchmesser und Tiefe von 1:10 in der Großserie nicht durchgesetzt. Problematisch gestaltet sich in solchen Dimensionen heute auch die Elektrodenhandhabung.

Der Erfindung liegt die Aufgabe zugrunde, ein Verfahren und eine Vorrichtung der eingangs genannten Art weiterzuentwickeln, wodurch ein unmittelbares, schnelles und einfaches Stellsystem zur Arbeitsspaltregelung geschaffen werden soll, und wobei die Werkzeugelektrode selbst ein aktives Bestandteil des Stellsystems ist. Eine weitere

Aufgabe der Erfindung ist eine einfache

Elektrodenhandhabung, d.h. das Aufnehmen, Ausrichten und Spannen der Werkzeugelektrode zur kontinuierlichen Bearbeitung des Werkstücks zwecks Bildung einer gewünschten Öffnung soll derart ausgestaltet sein, dass ein Einsatz in der Großserie ermöglicht wird. Unter Öffnung fallen dabei insbesondere, jedoch nicht ausschließlich, sogenannte Mikrobohrungen, wobei der Elektrodendurchmesser zwischen 20 $\mu$m und 200 $\mu$m liegt.

Die oben genannten Aufgaben werden erfindungsgemäß durch die Merkmale der unabhängigen Ansprüche gelöst.

Vorteilhafte Ausgestaltungen der Erfindung sind in den Unteransprüchen aufgeführt. Im Vergleich zu den bekannten Vorrichtungen hat die erfindungsgemäße Elektroerosionsbearbeitungsvorrichtung den Vorteil, dass durch die seitliche Ablenkung der Werkzeugelektrode eine axiale Bewegung des freien Endteils hervorgerufen wird, womit eine schnelle und genaue Feinregelung des Arbeitsspaltes geschaffen wird. Die vorteilhafte Ausführung beruht auf dem physikalischen Gesetz, dass ein mit Strom durchflossener Leiter in einem Magnetfeld abgelenkt wird. Zu diesem Zweck wird ein Teil der Werkzeugelektrode der Wirkung eines Magnetfeldes ausgesetzt. Die Werkzeugelektrode kann die Form eines durchlaufenden, länglichen Werkzeugs, wie z.B. die eines Drahtes haben, der vom Werkzeugkopf gehalten wird. Der aus dem Werkzeugkopf herausragende Teil des Drahtes weist eine bestimmte Länge auf, die es ermöglicht, dass die Drahtelektrode, die sich im Magnetfeld befindet, elastisch deformiert werden kann, da durch die Drahtelektrode während des Erosionsprozesses Erosionsbearbeitungsstrom fließt, womit eine Ablenkkraft quer zur Elektrodenachse entsteht. Diese Ablenkkraft kann eine elastische Auslenkbewegung der Drahtelektrode hervorrufen, die in der Elektrodenführung in eine axiale Bewegung des freien Endteils umgewandelt wird. Es ist dabei von großem Vorteil, dass gerade die Werkzeugelektrode selbst der bewegliche Teil eines elektromagnetischen Wandlers ist, wodurch sich die Ausführung des Wandlers sehr vereinfacht und die Positioniergenauigkeit erhöht wird, da keine Übertragungselemente mehr notwendig sind. Auch kommt es zu einer Erhöhung der Positioniergeschwindigkeit, da die Masse des beweglichen Teils auf ein Minimum reduziert wird. Es ist weiterhin von großem Vorteil, dass die axiale Bewegung der Werkzeugelektrode unmittelbar der Erosionsbearbeitungsstromstärke entspricht, die im Wesentlichen durch den Arbeitsspalt bestimmt wird, so dass auch eine unmittelbare Proportionalregelung des Arbeitsspaltes in Abhängigkeit des Erosionsbearbeitungsstromes geschaffen wird.

Die Elektrodenführung hat einen ovalen Hohlraum, der eine Ab- bzw. Auslenkung der Drahtelektrode zulässt, aber auch gleichzeitig begrenzt, und den Gleitdurchgang, in dem die seitliche Auslenkbewegung der Drahtelektrode, die in dem ovalen Hohlraum entsteht, in eine axiale Bewegung des freien Endteils umgewandelt. Seitlich an der Elektrodenführung sind jeweils die Pole einer Magnetquelle untergebracht, die ein homogenes Magnetfeld im Hohlraum erzeugen. Zwischen der Elektrodenführung und dem Werkstück befindet sich ein Spalt, dessen Breite nur so groß ist, dass die Bearbeitungsflüssigkeit den Bearbeitungsspalt ausreichend ausspülen kann. Auf diese Weise ist der herausragende freie Endteil der Drahtelektrode gut an das Werkstück herangeführt.

Elektrodenvorschubantriebsorgane haben die Aufgabe, die Drahtelektrode entsprechend dem Abtrag und dem Verschleiß so nachzuführen, dass nur sie bestromt werden kann. Die Optimierung des Arbeitsspaltes geschieht dann sehr schnell und genau durch Ablenkung der Drahtelektrode. Daher sind Elektrodenvorschubantriebsorgane nur für grobe und langsame Vorgänge ausgelegt und können relativ einfach und preisgünstig gefertigt werden. Die Einfädelung der Drahtelektrode in die Führung erfolgt automatisch mittels der Elektrodenvorschubantriebsorgane, wobei die Drahtelektrode auf eine Spule im Werkzeugkopf als Vorrat gespeichert ist.

Wenn die Länge des Drahtes im Magnetfeld und die Feldstärke des äußeren Magnetfeldes konstant gehalten werden, hängt die Ablenkkraft proportional von dem Erosionsbearbeitungsstrom ab, und der hängt wiederum vom Arbeitsspalt ab, wodurch sich ein P-Regler ohne zusätzlichen Aufwand ergibt. Andere Reglungssysteme können auch angewendet werden, wenn mit Hilfe eines Elektromagneten ein äußeres Magnetfeld erzeugt wird, dessen Feldstärke durch einen Erosionsprozessor geregelt wird.

Die Drahtelektrode kann während des Bearbeitungsprozesses gedreht werden, zwecks besserer Spülung, insbesondere bei tieferen Bohrungen, und auch zwecks Reibungsausgleiches zwischen dem Gleitdurchgang und der Drahtelektrode.

Die Erfindung wird anhand der Zeichnung näher erläutert. Darin zeigt:

Figur 1 eine schematische Darstellung, teilweise in einer Schnittansicht und teilweise als Schaltbild zur Veranschaulichung einer Elektroerosionsbearbeitungsvorrichtung mit Verwendung einer durchlaufenden Drahtelektrode unter Anwendung der Erfindung und

Figur 2 eine vergrößerte schematische Darstellung der Elektrodenführung gemäß der Figur 1.

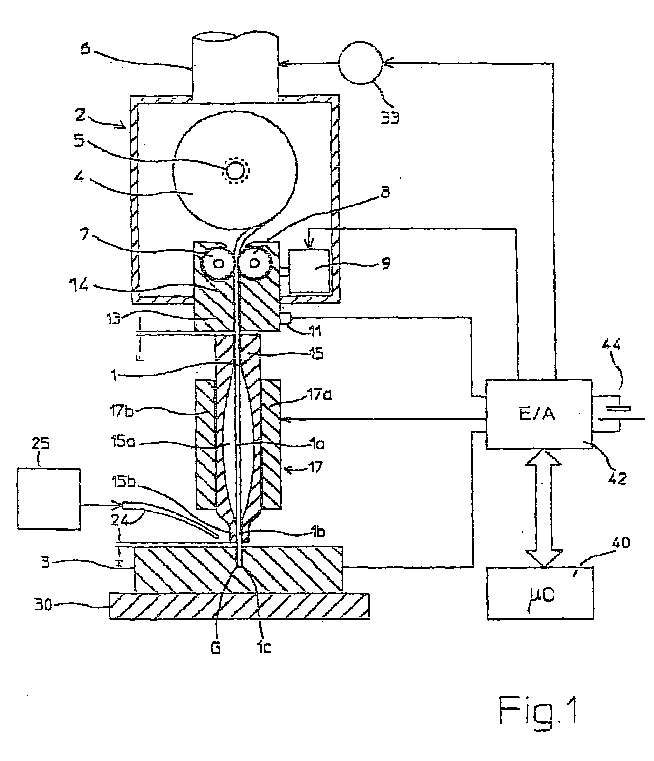

Gemäß Figur 1 verwendet die dargestellte Vorrichtung eine Werkzeugelektrode in Form eines durchlaufenden Drahtes aus beispielsweise Kupfer mit einer Dicke von 0,02 mm bis 0,2 mm. Der Darstellung nach erstreckt sich die Drahtelektrode 1 in einer Elektrodenführung 15 in einem mit 2 bezeichneten Werkzeugkopf so, dass sie einen aus der Elektrodenführung 15 herausragenden freien Endteil 1c aufweist, der an der Bearbeitungselektrodenfläche 1d endet, die in einem Abstand G einem Werkstück 3 gegenübersteht, womit nach der Darstellung ein Loch bearbeitet wird. Der Werkzeugkopf 2 ist an einer Spindel 6 befestigt, der ggf. auch zum Drehen des Werkzeugkopfes 2 dient. Die durchlaufende Drahtelektrode ist auf einer Spule 4 gespeichert, die im Werkzeugkopf 2 mittels eines Stiftes 5 drehbar gehalten ist. Im Werkzeugkopf 2 befindet sich außerdem eine Buchse 13, in welcher die Elektrodenvorschuborgane untergebracht sind. Die Buchse 13 enthält eine Mitnehmerrolle 8 und eine Quetschrolle 7, zwischen denen die Drahtelektrode 1 gehalten ist, sowie einen Antriebsmotor 9 zur Drehung der Mitnehmerrolle 8 über ein nicht dargestelltes Getriebe zur Axialbewegung der von der Spule 4 geführten Drahtelektrode 1. Die Buchse 13 enthält außerdem eine Bohrung 14, in welcher die Drahtelektrode bei einer Vorschubbewegung geführt und formschlüssig gehalten wird. Zwischen dem Werkzeugkopf 2 und der Elektrodenführung 15 ist ein Luftspalt F vorgesehen, um die Relativbewegung zwischen der Buchse 12 und der Elektrodenführung 15 zu ermöglichen.

Seitlich an der Elektrodenführung 15 sind die Pole 17a und 17b eines Magneten 17 untergebracht, die vorzugsweise von einem Elektromagneten stammen und ein homogenes Magnetfeld 18 in einem ovalen Hohlraum 15a der Elektrodenführung 15 erzeugen. Die Elektrodenführung 15 ist vorzugsweise aus nichtmagnetischem und elektrisch leitendem Material gefertigt. Zwischen der Elektrodenführung 1 und dem Werkstück 3 ist ein Spalt H vorhanden, so dass die Bearbeitungsflüssigkeit den Bearbeitungsspalt G ausreichend ausspülen kann.

Ein allgemein mit der Bezugsziffern 42 bezeichnetes Ein-/Ausgangsmodul ist vorgesehen, das als Steuerungseinheit für einen Spindelmotor 33, einen Elektrodenvorschubmotor 9 und den Elektromagneten 17 dient. Die Drahtelektrode 1 wird auch über das Ein-/Ausgangsmodul 42 und einen Kontakt 11 mit einer Gleichstromquelle 44 verbunden sowie ein- und ausgeschaltet, um eine Folge elektrischer Entladungen zwischen der Bearbeitungsfläche 1d im freien Endteil 1c der Drahtelektrode 1 und dem Werkstück 3 durch den mit einer Arbeitsflüssigkeit gespülten Arbeitsspalt G zu erzeugen. Die Arbeitsflüssigkeit kann in den Arbeitsspalt G von einer oder mehreren, mit einer Flüssigkeitsquelle verbundenen Düsen 24 eingeführt werden. Das Werkstück 3 ist auf einem Werkstücktisch 30 fest montiert. Ein Prozessrechner 40 ist mit dem Ein-/Ausgangsmodul 42 verbunden und verarbeitet prozessbestimmende Einstellgrößen.

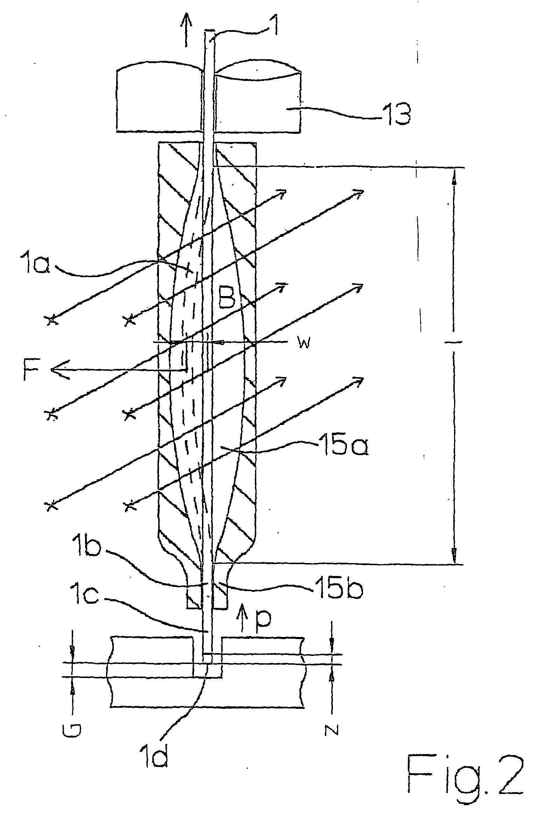

Das Funktionsprinzip wird nunmehr anhand der Skizze in der Figur 2 veranschaulicht: Die Drahtelektrode 1, die sich aus der Buchse 13 erstreckt, hat einen Ablenkteil 1a im ovalen Hohlraum 15a, einen geführten Teil 1b im Gleitdurchgang 15b sowie ein aus der Elektrodenführung 15 herausragendes freies Endteil 1c, welches an der Bearbeitungsfläche 1d endet. Der mittlere Ablenkteil 1a hat eine Länge l, befindet sich im Magnetfeld B, und ist mit dem Erosionsbearbeitungsstrom I bestromt. Auf den Ablenkteil 1a wirkt in weiterer Folge eine Kraft F quer zur Elektrodenachse und versucht, den Ablenkteil 1a in Richtung des Pfeils F abzulenken. Die Ablenkkraft F lässt sich wie folgt berechnen:

$$F = B*I*l$$

Wobei

B = magnetische Flussdichte.
I = Erosionsbearbeitungsstrom
l = Länge der im Magnetfeld befindlichen Drahtelektrode.

Wenn die Kraft F groß genug ist, weil z.B. der Arbeitsspalt G zu klein ist und der Erosionsbearbeitungsstrom I deswegen angestiegen ist, wird der Ablenkteil 1a aus der Achse um den Betrag w ausgelenkt. In dem Gleitdurchgang 15b wird diese Bewegung quer zur Elektrodenachse durch eine Übersetzung in eine axiale Bewegung in Richtung des Pfeils P umgewandelt, wodurch sich der Arbeitsspalt G um den Betrag z vergrößert, so dass Drahtelektrode 1 auf der anderen Seite durch die Mitnehmerrolle 8 und die Quetschrolle 7 im Werkzeugkopf 2 festgehalten wird. Sobald sich der Arbeitsspalt G vergrößert sinkt der Erosionsbearbeitungsstrom I und auch die Ablenkkraft F, wodurch sich der Ablenkteil 1a durch die elastischen Kräfte der Drahtelektrode 1 wieder begradigt, und der Arbeitsspalt G wieder kleiner wird. Der Vorgang wiederholt sich, bis es zu einem Ausgleich der Kräfte kommt.

## Patentansprüche

1.  Verfahren zur elektroerosiven Materialbearbeitung eines Werkstücks (3) mit einer länglichen Werkzeugelektrode (1) mit einer Vorrichtung gemäss einer der Ansprüche 5-7, bei dem man durch das Elektrodenvorschubantriebsorgan (7, 8) im Werkzeugkopf (2) die Werkzeugelektrode (1) derart hält, dass ihr ein Bearbeitungselektrodenfläche (1d) bildender freier Endteil (1c) in einem Abstand dem Werkstück (3) gegenübersteht und ein mit einer Bearbeitungsflüssigkeit gespülter Bearbeitungsspalt (G) dazwischen begrenzt wird sowie einen Erosionsbearbeitungsstrom zwischen der Werkzeugelektrode (1) und dem Werkstück (3) anlegt, um elektroerosiv Material vom Werkstück (3) abzutragen, wobei die Werkzeugelektrode (1) zwischen Werkzeugkopf (2) und freiem Endteil (1c) in einer Werkzeugelektrodenführung (15) eingefädelt ist, in welcher die Werkzeugelektrode (1) zur Optimierung des Arbeitsspaltes (G) seitlich abgelenkt und die seitliche Ablenkung in eine axiale Bewegung des freien Endteils (1c) umgewandelt wird.

2.  Verfahren nach Anspruch 1, **dadurch gekennzeichnet, dass** die Werkzeugelektrode (1) zwischen Werkzeugkopf (2) und freiem Endteil (1c) der Wirkung eines Magnetfeldes (B) ausgesetzt wird, welches eine seitliche Ablenkung der mit Erosionsbearbeitungsstrom bestromten Werkzeugelektrode (1) bewirkt.

3.  Verfahren nach Anspruch 1 oder 2, **dadurch gekennzeichnet, dass** es zu einer Grobregelung des Arbeitsspaltes (G) mit Hilfe des Elektrodenvorschubantriebsorgangs (7, 8) im Werkzeugkopf (2) sowie zu einer Feinregelung durch die Ablenkung der Werkzeugelektrode (1) kommt.

4.  Verfahren nach Anspruch 1, **dadurch gekenn-**

**zeichnet, dass** die Werkzeugelektrode (1) durch das Elektrodenvorschubantriebsorgan (7, 8) formschlüssig gehalten wird und in die Werkzeugelektrodenführung (15) eingefädelt wird.

5. Vorrichtung zur elektroerosiven Materialbearbeitung eines Werkstücks (3) mit einer länglichen, elastisch deformierbaren werkzeugelektrode (1), mit einem Werkzeugkopf (2) zum Halten der Werkzeugelektrode (1), womit ihr eine Bearbeitungselektrodenfläche (1d) bildendes, freies Endteil (1c) in einem Abstand gegenüber dem Werkstück (3) gebracht wird und ein mit einer Bearbeitungsflüssigkeit gespülter Bearbeitungsspalt (G) begrenzt wird sowie mit einer Stromzuführeinrichtung zum Anlegen eines Erosionsbearbeitungsstroms zwischen der Werkzeugelektrode (1) und dem Werkstück (3) zwecks elektroerosiver Materialabtragung vom werkstück (3), **gekennzeichnet durch** einen elektromagnetischen Wandler (15, 17) zur unmittelbaren Umwandlung des Erosionsbearbeitungsstroms in eine entsprechende axiale Bewegung des freien Endteils (1c) der Werkzeugelektrode (1) zur Beibehaltung des optimalen Arbeitsspalts (G) beim Erosionsprozess, indem der elektromagnetische Wandler (15, 17) einen Magneten (17), zwischen dessen Polen (17a, 17b) sich die Werkzeugelektrode (1) befindet, und eine Elektrodenführung (15) aufweist.

6. Vorrichtung nach Anspruch 5 , **dadurch gekennzeichnet, dass** die Elektrodenführung (15) ein Rohr ist, das sich zwischen Werkzeugkopf (2) und Werkstück (3) erstreckt, wobei an jeder Seite jeweils ein Luftspalt vorhanden ist, der in der Mitte einen ovalen Hohlraum (15a) und an der dem Werkstück zugewandten Seite einen Gleitdurchgang (15b) aufweist.

7. Vorrichtung nach Anspruch 5 , **dadurch gekennzeichnet, dass** an der Elektrodenführung (15) im Bereich des ovalen Hohlraums (15a) die Pole (17a, 17b) des Magneten (17) untergebracht sind.

**Claims**

1. Method for the electroerosive material machining of a workpiece (3) with an elongated tool electrode (1) using an apparatus according to one of Claims 5-7, in which method the tool electrode (1) is held in the tool head (2) by the electrode feed drive member (7, 8) in such a manner that the free end part (1c) of said tool electrode, which forms a machining electrode face (1d), lies opposite the workpiece (3) at a spacing therefrom, and a machining gap (G), flushed with a machining liquid, is defined therebetween, and also an erosive machining current is applied between the tool electrode (1) and the workpiece (3) in order to remove material electroerosively from the workpiece (3), wherein the tool electrode (1) is threaded between the tool head (2) and the free end part (1c) in a tool electrode guide (15), in which the tool electrode (1) is deflected laterally to optimize the working gap (G) and the lateral deflection is converted into an axial movement of the free end part (1c).

2. Method according to Claim 1, **characterized in that** the tool electrode (1) is exposed between the tool head (2) and the free end part (1c) to the action of a magnetic field (B), which causes a lateral deflection of the tool electrode (1) supplied with erosive machining current.

3. Method according to Claim 1 or 2, **characterized in that** it involves coarse regulation of the working gap (G) with the aid of the electrode feed drive member (7, 8) in the tool head (2), and also fine regulation by the deflection of the tool electrode (1).

4. Method according to Claim 1, **characterized in that** the tool electrode (1) is held by positive engagement by the electrode feed drive member (7, 8) and is threaded into the tool electrode guide (15).

5. Apparatus for the electroerosive material machining of a workpiece (3) with an elongated, elastically deformable tool electrode (1), comprising a tool head (2) for holding the tool electrode (1), whereby the free end part (1c) of said tool electrode, which forms a machining electrode face (1d), is placed opposite the workpiece (3) at a spacing therefrom, and a machining gap (G), flushed with a machining liquid, is defined, and also comprising a current feed device for applying an erosive machining current between the tool electrode (1) and the workpiece (3) for the purpose of electroerosive removal of material from the workpiece (3), **characterized by** an electromagnetic converter (15, 17) for directly converting the erosive machining current into a corresponding axial movement of the free end part (1c) of the tool electrode (1) for retaining the optimum working gap (G) during the erosion process, in that the electromagnetic converter (15, 17) has a magnet (17), between the poles (17a, 17b) of which the tool electrode (1) is located, and an electrode guide (15).

6. Apparatus according to Claim 5, **characterized in that** the electrode guide (15) is a tube which extends between the tool head (2) and the workpiece (3), wherein on each side there is a respective air gap which, in the middle, has an oval cavity (15a) and, on that side which faces towards the workpiece, a sliding passage (15b).

7. Apparatus according to Claim 5, **characterized in that** the poles (17a, 17b) of the magnet (17) are accommodated on the electrode guide (15), in the region of the oval cavity (15a).

## Revendications

1. Procédé d'usinage par électroérosion du matériau d'une pièce (3) à l'aide d'une électrode d'outil allongée (1) et d'un dispositif selon l'une des revendications 5 à 7, dans lequel l'électrode d'outil (1) est maintenue dans la tête d'outil (2) par l'organe (7, 8) d'entraînement d'avancement de l'électrode de telle sorte qu'une partie d'extrémité libre (1c), qui forme une surface (1d) d'électrode de traitement, en déborde à distance de la pièce (3) et qu'un interstice intermédiaire de traitement (G) balayé par un liquide de traitement soit délimité, et en appliquant un courant de traitement d'érosion entre l'électrode d'outil (1) et la pièce (3) pour enlever par électroérosion du matériau de la pièce (3),
l'électrode d'outil (1) étant enfilée entre la tête d'outil (2) et la partie d'extrémité libre (1c) dans un guide (15) d'électrode d'outil dans lequel l'électrode d'outil (1) est décalée latéralement pour optimiser l'interstice de travail (G), la déviation latérale étant convertie en un déplacement axial de la partie d'extrémité libre (1c).

2. Procédé selon la revendication 1, **caractérisé en ce qu'**entre la tête d'outil (2) et la partie d'extrémité libre (1c), l'électrode d'outil (1) est exposée à l'effet d'un champ magnétique (B), le champ magnétique ayant pour effet une déviation latérale de l'électrode d'outil (1) alimentée en courant de traitement par érosion.

3. Procédé selon les revendications 1 ou 2, **caractérisé en ce qu'**il réalise une régulation grossière de l'interstice de travail (G) à l'aide de l'organe (7, 8) d'entraînement d'avancement de l'électrode dans la tête d'outil (2) ainsi qu'une régulation fine par déviation de l'électrode d'outil (1).

4. Procédé selon la revendication 1, **caractérisé en ce que** l'électrode d'outil (1) est maintenue en correspondance géométrique par l'organe (7, 8) d'entraînement d'avancement de l'électrode et est enfilée dans le guide (15) d'électrode d'outil.

5. Dispositif d'usinage par électroérosion du matériau d'une pièce (3), le dispositif présentant une électrode d'outil (1) allongée et élastiquement déformable, une tête d'outil (2) qui maintient l'électrode d'outil (1) et grâce à laquelle sa partie d'extrémité libre (1c) qui forme une surface (1d) d'électrode de traitement est amenée à distance de la pièce (3) et un interstice de traitement (G) balayé par un liquide de traitement est délimité,
le dispositif présentant également un système d'amenée de courant qui applique un courant de traitement par érosion entre l'électrode d'outil (1) et la pièce (3) en vue d'enlever par électroérosion du matériau à la pièce (3),
**caractérisé par**
un convertisseur électromagnétique (15, 17) qui convertit directement le courant de traitement par érosion en un déplacement axial correspondant de la partie d'extrémité libre (1c) de l'électrode d'outil (1) en vue de maintenir l'interstice optimal de travail (G) lors de l'opération d'érosion, par le fait que le convertisseur électromagnétique (15, 17) présente un aimant (17) entre les pôles (17a, 17b) duquel est située l'électrode d'outil (1), et un guide d'électrode (15).

6. Dispositif selon la revendication 5, **caractérisé en ce que** le guide d'électrode (15) est un tube qui s'étend entre la tête d'outil (2) et la pièce (3), un entrefer qui présente en son milieu une cavité ovale (15a) et sur le côté tourné vers la pièce un passage coulissant (15b) étant prévu de chaque côté.

7. Dispositif selon la revendication 5, **caractérisé en ce que** les pôles (17a, 17b) de l'aimant (17) sont placés sur le guide d'électrode (15) au niveau de la cavité ovale (15a).

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4771157 A

- DE 3142606 A1